# EUROPÄISCHE PATENTSCHRIFT

(11) **EP 1 400 378 B1**
(45) Veröffentlichungstag und Bekanntmachung des Hinweises auf die Patenterteilung: **25.02.2009**
(21) Anmeldenummer: 03014377.0
(22) Anmeldetag: 26.06.2003
(51) Int. Cl.: B60C 23/04

(54) **Transponder für Reifen**
Transponder for tire
Transpondeur pour pneu

(30) Priorität: 18.09.2002 DE 10243441
(43) Veröffentlichungstag der Anmeldung: 24.03.2004
(73) Patentinhaber: Continental Aktiengesellschaft, 30165 Hannover (DE)
(72) Erfinder: Strache, Wolfgang, Dr., 30169 Hannover (DE); Lehmann, Jörg, Dr., 30451 Hannover (DE); Behrends, Holger, 30179 Hannover (DE); Besson, Marc-André, 30823 Garbsen (DE); Becker, Carla, Dr., 30167 Hannover (DE); Jenke, Roland, 29693 Hademstorf (DE); Härtel, Volker, Dr., 82110 Germering (DE); Wulf, Andreas, 31553 Auhagen (DE)

(56) Entgegenhaltungen:
- EP-A- 0 829 382
- EP-A- 0 924 112
- EP-A- 1 070 580
- WO-A-00/07834
- US-B1- 6 217 683
- US-B1- 6 444 069

## Beschreibung

Die Erfindung betrifft einen Transponder, der an einem Reifen angebracht ist, wobei der Transponder zumindestens einen Transponder-Chip sowie eine Transponder-Antenne umfasst und in ein Substrat eingebettet ist, und das Substrat über ein Mittel mit einer Reifeninnenseite in Verbindung steht.

Transponder werden im Reifen für verschiedene Aufgaben eingesetzt. Hierzu zählt insbesondere eine Reifenidentifikation, mit der ein Automobilhersteller u. a. schnell sowie automatisiert feststellen kann, aus welchem Reifenwerk ein bestimmter Reifen geliefert wurde. Andere Aufgaben können eine Luftdrucküberwachung, eine Temperaturmessung, die Messung von mechanischen Spannungszuständen im Reifen oder eine Messung der zurückgelegten Laufleistung des Reifens umfassen. Moderne Transponder bestehen aus einem Elektronikbauteil bzw. -Chip, in dem Sensorelemente angeordnet sein können sowie aus einer an dieses Elektronikbauteil angeschlossenen Antenne.

Ein Problem bei Reifentranspondern ist mit der Anordnung des Transponders im Reifen verbunden. Die DE 44 26 022 C1 zeigt beispielsweise einen Transponder, der in einem sogenannten Container angeordnet ist, der wiederum fest an die Reifeninnenseite geklebt wird. Sowohl der Container, der die Funktion eines Gehäuses hat, als auch die zwischen Transponder und Reifeninnenseite liegende steifere Trägerschicht sind fest mit dem Transponder verbunden. Ein wesentlicher Nachteil dieser Verbundanordnung besteht darin, dass im Betriebszustand des Reifens durch die auftretenden Deformationen hohe Beanspruchungen auf den Transponder übertragen werden, die entweder zur Beschädigung der Transponder-Antenne oder zum Bruch der Verbindungsstelle zwischen Transponder-Chip und Transponderantenne führen. Der Transponder kann dann durch die irreversiblen Beschädigungen nicht mehr zur Datenübertragung eingesetzt werden.

Die WO00 07837 A offenbart ein Reifenmodul bei dem das Elektronikmodul mit einer Art von Gummilippen fixiert wird.
Die EP 0829 382 A offenbart ein Reifenmodul bei dem das Elektronikmodul mit beabstandeten Verbindungselementen auf der Reifeninnenseite angeordnet wird.

Der Erfindung liegt die Aufgabe zugrunde, einen Transponder zum Einbau in einen Reifen bereitzustellen, der eine möglichst hohe Dauerfestkeit besitzt.

Gelöst wird die Aufgabe gemäß Anspruch 1.

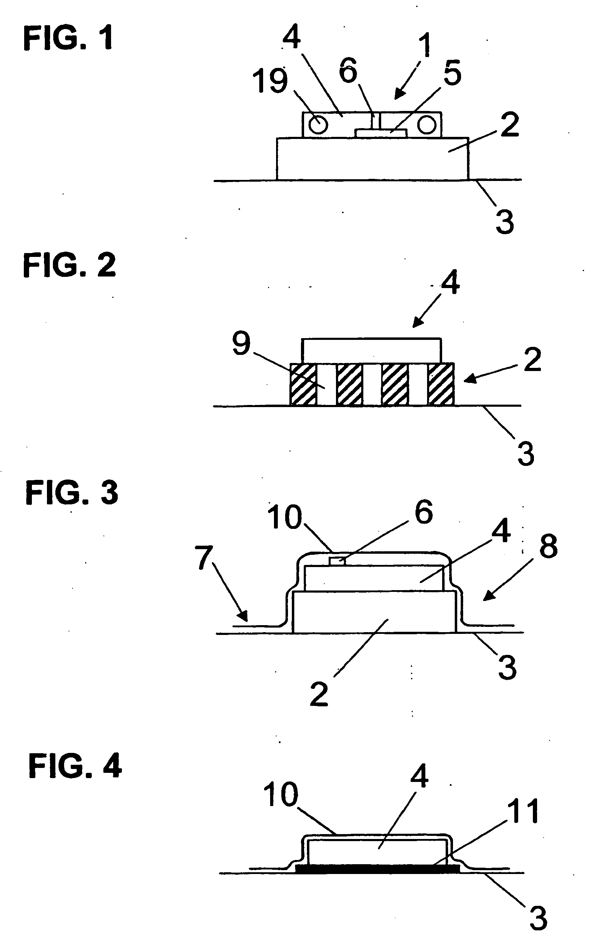

Die Ausführungsbeispiele in den Figuren 1 bis 3 und 6 bis 10 sowie die entsprechenden Beschreibungsteile sind Beispiele, die zum Verständnis der Erfindung beitragen und ggf. nicht unter den Anspruch 1 der Erfindung fallen.

Ein Vorteil der Erfindung ist insbesondere darin zu sehen, dass durch die weiche oder gleitende Lagerung die auf den Transponder einwirkenden Beanspruchungen wesentlich reduziert werden. Bei dieser erfindungsgemäßen Anordnung wird sowohl der Anteil der auf den Transponder übertragenen Schubspannungen und Normalspannungen vernachlässigbar klein. Diese Wirkung gilt ebenso für die Biegewechselbeanspruchung, die im Betriebszustand des Reifens auf den Transponder einwirkt und durch die erzielte Entkopplung erheblich reduziert wird. Der Transponder besitzt dadurch insgesamt eine bedeutend höhere Dauerfestigkeit.

In einer vorteilhaften Weiterbildung der Erfindung ist vorgesehen, dass die Verbindungsstruktur als Kissenlagerung ausgebildet ist. Bei dieser Form der Entkopplung ist zwischen dem Transponder und der Reifeninnenseite ein weiches Materialkissen angeordnet. Die Kissenlagerung ist eine besonders einfach zu realisierende Konstruktion, um dadurch eine Entkopplung zu erreichen.

In einer weiteren vorteilhaften Weiterbildung der Erfindung ist vorgesehen, dass die Kissenlagerung aus einer Silikonschicht besteht. Silikon besitzt viskoelastische Materialeigenschaften und ist deswegen für eine weiche Lagerung besonders geeignet. Ferner lässt sich dieses Material einfach verarbeiten.

In einer weiteren vorteilhaften Weiterbildung der Erfindung ist vorgesehen, dass die Kissenlagerung aus einem Luft-, Gel- oder Schaumstoffkissen besteht. Durch diese Materialien lässt sich ebenfalls auf eine einfache Weise eine weiche Lagerung erzielen.

In einer weiteren vorteilhaften Weiterbildung der Erfindung ist vorgesehen, dass die Kissenlagerung aus einem Moosgummi besteht. Dabei handelt es sich um ein geschlossenzelligen Elastomerschaum, welcher zusätzlich dämpfende Eigenschaften besitzt, um die auftretenden Beanspruchungen zu kompensieren.

In einer weiteren vorteilhaften Weiterbildung der Erfindung ist vorgesehen, dass die Kissenlagerung eine stegartige Struktur aufweist. Die stegartige Verbindungsstruktur trägt zu einer erhöhten Entkopplung zwischen Transponder und Reifeninnenseite bei.

In einer weiteren vorteilhaften Weiterbildung der Erfindung ist vorgesehen, dass das Substrat und die Kissenlagerung von einem Flicken überdeckt wird, der mit der Reifeninnenseite verbunden ist. Auf diese Weise kann auf eine Verklebung zwischen den in das Substrat eingebetteten Transponder und der Kissenlagerung verzichtet werden. Infolgedessen werden zwischen dem Transponder und der Kissenlagerung nur noch vernachlässigbare Schubspannungen übertragen.

In einer weiteren vorteilhaften Weiterbildung der Erfindung ist vorgesehen, dass das Substrat von einem Flicken überdeckt wird, der mit der Reifeninnenseite verbunden ist, wobei zwischen dem Substrat sowie der Reifeninnenseite ein Trennmedium angeordnet ist, auf dem sich das Substrat gleitend bewegen kann. Bei dieser Anordnung kann sich der in das Substrat eingebettete Transponder gleitend auf dem Trennmedium bewegen, wodurch nur sehr geringe Schubspannungen auf den Transponder übertragen werden. Eine vorteilhafte Ausführungsform des Trennmediums ist eine Folie.

In einer weiteren vorteilhaften Weiterbildung der Erfindung ist vorgesehen, dass zwischen dem Substrat und dem Flicken ein Trennmittel angeordnet ist. Das Trennmittel, z. B. in Form eines Pulvers, Gels oder einer Lösung, unterbindet eine Adhäsion zwischen dem in das Substrat eingebetteten Transponder und dem Gummimaterial des Flickens. Dadurch können vom Flicken ebenfalls nur geringe Schubspannungen übertragen werden.

In einer weiteren vorteilhaften Weiterbildung der Erfindung ist vorgesehen, dass der Flicken an mindestens einer Stelle luftdurchlässig ist. Auf diese Weise liegt in dem Hohlraum zwischen Flicken und Reifeninnenseite der gleiche Luftdruck vor, wodurch die Beanspruchung des Transponders im Betriebszustand des Reifens niedriger ausfällt.

In einer weiteren vorteilhaften Weiterbildung der Erfindung ist vorgesehen, dass das Substrat in einem Fluid in einer Kavität des Flickens gelagert ist. Der in das Substrat eingebettete Transponder ist dabei freischwimmend in dem Fluid gelagert, so dass weder Schub- noch Normalspannung auf das Substrat übertragen werden können.

In einer weiteren vorteilhaften Weiterbildung der Erfindung ist vorgesehen, dass das Substrat über mindestens einen Verbindungssteg, das die Verbindungsstruktur bildet, mit der Reifeninnenseite in Verbindung steht. Bei dieser Ausführungsform liegt eine pilzförmige Verbindungsstruktur vor, die sich ebenfalls durch einen hohen Entkopplungsgrad zwischen Transponder und Reifeninnenseite auszeichnet.

In einer weiteren vorteilhaften Weiterbildung der Erfindung ist vorgesehen, dass das Substrat über eine Rast- oder Schnappverbindung mit dem Verbindungssteg verbunden wird. Auf diese Weise lässt sich der Transponder einfach mit dem Verbindungssteg verbinden und wenn notwendig ebenfalls wieder trennen.

In einer weiteren vorteilhaften Weiterbildung der Erfindung ist vorgesehen, dass das Substrat eine der Reifeninnenseite angepasste bogenförmige Gehäusekontur aufweist. Dadurch wird sichergestellt, dass der Transponder auch beim Latschein- und Latschauslauf nicht mit der Reifeninnenseite in Kontakt tritt.

In einer weiteren vorteilhaften Weiterbildung der Erfindung ist vorgesehen, dass das Substrat in einem Flicken angeordnet ist, der nur in einem oder mehreren Teilbereichen fest mit der Reifeninnenseite verbunden ist. Bei dieser Ausführungsform können ebenfalls nur minimale Schubspannungen auf den Transponder übertragen werden.

In einer weiteren vorteilhaften Weiterbildung der Erfindung ist vorgesehen, dass zwischen dem Flicken und der Reifeninnenseite ein Trennmedium angeordnet ist. Das Trennmedium verhindert eine Adhäsion zwischen Flicken und Reifeninnenseite, wodurch der Entkopplungseffekt gesteigert wird.

Anhand mehrerer Ausführungsbeispiele soll die Erfindung näher erläutert werden. Es zeigen:
- Fig. 1:: einen auf einer Reifeninnenseite angeordneten in einem Substrat eingebetteten Transponder mit einer Kissenlagerung als Verbindungsstruktur
- Fig. 2:: eine Kissenlagerung mit einer stegförmigen Verbindungsstruktur
- Fig. 3:: eine mit einem Flicken abgedeckte Verbindungsstruktur
- Fig. 4:: eine Verbindungsstruktur, bei der zwischen Transponder und Reifeninnenseite ein Trennmedium angeordnet ist
- Fig. 5:: einen Transponder, der in einem Fluid in einer Kavität des Flickens angeordnet ist
- Fig. 6:: einen in ein Substrat eingebetteten Transponder, der über zwei Verbindungsstege mit der Reifeninnenseite in Verbindung steht
- Fig. 7:: einen in ein Substrat eingebetteten Transponder, der über eine röhrenförmige Halterung mit der Reifeninnenseite in Verbindung steht
- Fig. 8:: einen in ein Substrat eingebetteten Transponder, der über eine Schnapp-Verbindung mit einem Verbindungssteg in Verbindung steht.
- Fig. 9:: einen in einen Flicken angeordneten Transponder, der nur in einem Teilbereich mit der Reifeninnenseite in Verbindung steht und
- Fig. 10:: die Draufsicht des in Figur 9 dargestellten Ausführungsbeispiels.

Figur 1 zeigt einen auf einer Reifeninnenseite 3 angeordneten in ein Substrat 4 eingebetteten Transponder 1 mit einer Kissenlagerung 2 als Verbindungsstruktur. Der Transponder setzt sich aus dem Transponder-Chip 5 und der Antennenspule 19 zusammen, die in ein Substrat 4 eingebettet sind. Das Substrat 4, welches die Funktion eines Gehäuses besitzt, kann sich beispielsweise aus Epoxid-Harz, einem Kunststoff, Gummi, Elastomer oder einer Folie zusammensetzen. Der Transponder 1 steht somit nicht in direkter Verbindung mit der Kissenlagerung 2, die die Verbindungsstruktur zur Reifeninnenseite 3 darstellt. Die Kissenlagerung 2 kann sich aus verschiedenen weichen Materialien zusammensetzen, insbesondere aus einem Silikon-Material. Es ist ebenfalls möglich, dass die Kissenlagerung aus einem Luftgel oder Schaumstoffkissen besteht. Das Substrat 4 wird beispielsweise über eine Klebeverbindung mit der Kissenlagerung 2 verbunden. Im Substrat 4 kann eine Öffnung 6 vorgesehen sein, über die der im Reifenhohlraum vorliegende Luftdruck gemessen werden kann. Diese Öffnung 6 ist ebenfalls bei den Ausführungsbeispielen in den nachfolgenden Figuren vorgesehen. Die Kissenlagerung 2 hat die Funktion, den Transponder 1 und das ihn umgebende Substrat 4 von der Reifeninnenseite zu entkoppeln, indem die Kissenlagerung 2 die von der Reifeninnenseite 3 einwirkenden Verformungen und Spannungen größtenteils absorbiert. Während auf der zur Reifeninnenseite 3 gewandten Seite der Kissenlagerung 2 die auftretenden Deformationen und mechanischen Spannungen sehr groß sind, liegen auf der gegenüberliegenden Seite der Kissenlagerung 2 nur noch vernachlässigbare Spannungszustände oder Deformationen vor. Auf diese Weise werden kaum Spannungen oder Deformationen auf das umgebende Substrat 4 des Transponders 1 übertragen, wodurch die Dauerfestkeit des Transponders 1 erheblich gesteigert wird.

Die Figur 2 zeigt eine Kissenlagerung 2 mit einer stegförmigen Verbindungsstruktur. In dieser sowie in den nachfolgenden Figuren wird der Transponder mit Transponder-Chip und Transponder-Antenne nicht explizit dargestellt. Es ist jeweils nur das Substrat 4 dargestellt in das der Transponder mit seinen Bauteilen eingebettet ist. Das Gleiche gilt für die Öffnung 6 in der Figur 1. Die Kissenlagerung 2 unterscheidet sich von dem ersten Ausführungsbeispiel in Figur 1 dadurch, dass die Kissenlagerung mehrere Ausnehmungen 9 aufweist. Diese Ausnehmungen 9 tragen zu einer Reduzierung der Steifigkeit der Kissenlagerung bei. Auf diese Weise wird die Spannungsübertragung von der Reifeninnenseite auf den Transponder 1 bzw. das umgebende Substrat weiterhin reduziert.

Die Figur 3 zeigt eine mit einem Flicken 10 abgedeckte Verbindungsstruktur. Dieses Ausführungsbeispiel stimmt im Wesentlichen mit dem ersten Ausführungsbeispiel in Figur 1 überein. Der in das Substrat 4 eingebettete Transponder wird mit Hilfe eines Flickens 7 auf der Reifeninnenseite 3 gehalten, wodurch keine klebende Verbindung zwischen der Kissenlagerung 2 und dem den Transponder umgebenden Substrat 4 notwendig ist. Durch die freie Beweglichkeit des Substrates 4 auf der Kissenlagerung 2 können nur minimale Schubspannungen übertragen werden.

Die Figur 4 zeigt eine Verbindungsstruktur, bei der zwischen dem Substrat 4 und der Reifeninnenseite 3 ein Trennmedium 11 angeordnet ist. Das Trennmedium 11 kann beispielsweise aus einer Kunststofffolie bestehen, auf dem sich der in das Substrat 4 eingebettete Transponder 1 freigleitend bewegen kann. Auf diese Weise können lediglich vernachlässigbare Schubspannungen übertragen werden. Zwischen dem Flicken 10 und dem Substrat 4 sollte ebenfalls ein Trennmittel vorgesehen werden, so dass eine Adhäsion zum Gummimaterial des Flickens unterbunden wird. Als Trennmittel können beispielsweise eine Fett-, Öl-, Pulver- oder Silikonschicht in Frage kommen, die in Form einer Lösung oder Paste auf das Substrat 4 aufgebracht wird. Es ist ebenfalls denkbar, dass das gesamte Substrat 4 mit einem solchen Trennmittel beschichtet wird, um damit auf das Trennmedium 11 verzichten zu können. Das Trennmittel hat wie das Trennmedium 11 die Funktion, eine Adhäsion zwischen Substrat 4 und dem umgebenden Gummimaterial zu unterbinden. Auf diese Weise können nur geringe Schubspannungen auf das Substrat 4 übertragen werden, die zu einer Schädigung des Transponders führen würden.

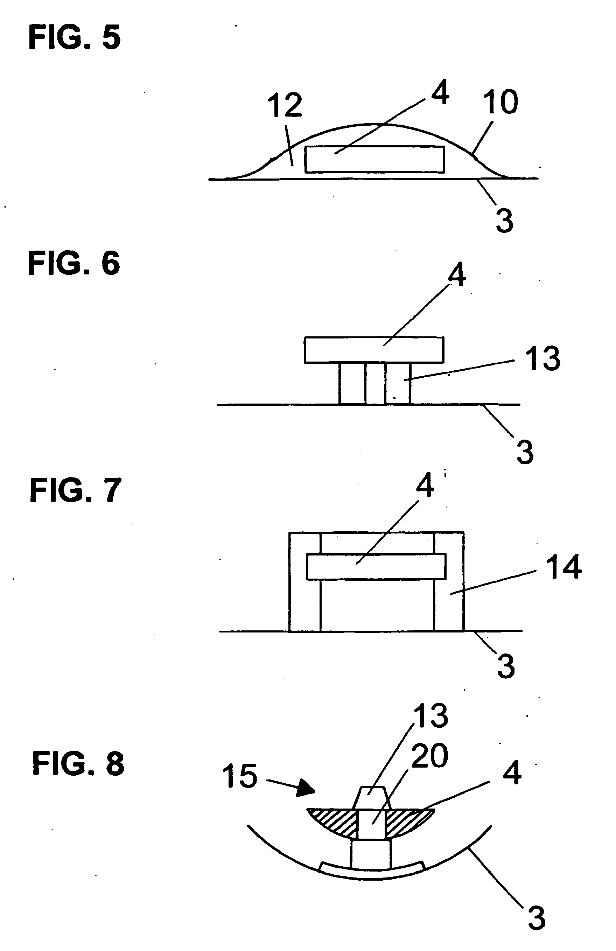

Figur 5 zeigt einen in ein Substrat 4 eingebetteten Transponder, der in einem Fluid 12 in einer Kavität des Flickens 10 angeordnet ist. Der in das Substrat 4 eingebettete Transponder ist freischwimmend in dem Fluid gelagert, so dass weder Schub- noch Normalspannung auf das Substrat 4 übertragen werden können. Als Fluid kann beispielsweise ein Silikon-Öl eingesetzt werden.

Figur 6 zeigt einen in ein Substrat 4 eingebetteten Transponder, der über zwei Verbindungsstege mit der Reifeninnenseite 3 in Verbindung steht. Die Verbindungsstege bestehen aus einem flexiblen Material und durch die geringe Steifigkeit der Verbindungsstruktur werden nur minimale Spannungen auf das Substrat 4 übertragen.

Figur 7 zeigt einen in ein Substrat 4 eingebetteten Transponder, der über eine röhrenförmige Halterung 14 mit der Reifeninnenseite 3 in Verbindung steht. Das Substrat 4 steht somit nur an seinen Außenrändern mit der röhrenförmigen Halterung 14 in Verbindung, die wiederum mit der Reifeninnenseite 3 verbunden, beispielsweise verklebt ist.

Figur 8 zeigt einen in ein Substrat 4 eingebetteten Transponder, der über eine Schnappverbindung 15 mit einem Verbindungssteg 20 in Verbindung steht. Bei diesem Ausführungsbeispiel besitzt das Substrat 4 eine Aussparung, die zusammen mit dem pilzförmigen Ende 13 des Verbindungssteges 20 eine formschlüssige Verbindung sicherstellt. Ferner besitzt das Substrat 4 eine sichelförmige Außenkontur, die der Kontur der Reifeninnenseite angepasst ist. Auf diese Weise ist sichergestellt, dass das Substrat 4 nicht mit der Reifeninnenseite 3 in Kontakt tritt.

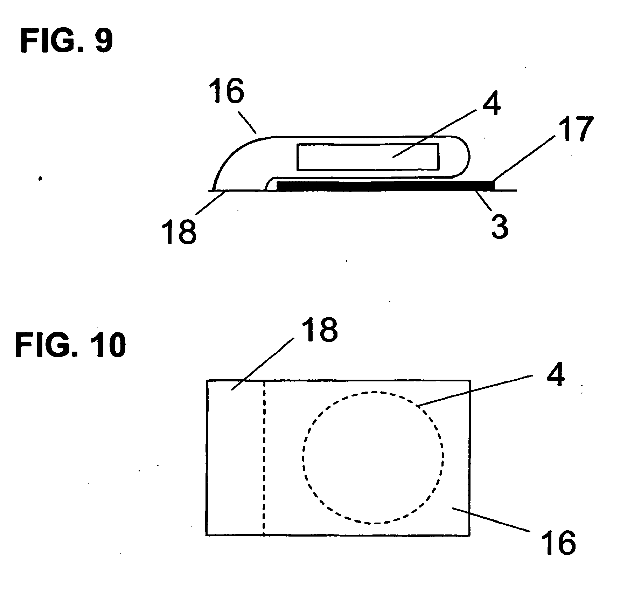

Die Figur 9 zeigt einen in einem Flicken 16 angeordneten Transponder, der nur in einem Teilbereich mit der Reifeninnenseite 3 in Verbindung steht. Das Substrat 4 ist vollständig in den Flicken 16 eingebettet. Außerdem kann zwischen dem Flicken 16 und der Reifeninnenseite ein Trennmedium vorgesehen werden, welches ein Anhaften des Flickens 16 an der Reifeninnenseite 3 verhindert. Auf diese Weise können wiederum keine Schubspannungen auf den Transponder übertragen werden. Die partielle Verbindungsstelle 18 des Flickens 16 kann beispielsweise über eine Klebeverbindung mit der Reifeninnenseite 3 in Verbindung stehen.

Figur 10 zeigt die Aufsicht des in Figur 9 dargestellten Ausführungsbeispieles. Der gestrichelte Kreis 4 zeigt die Außenkontur des in das Substrat 4 eingebetteten Transponders. Der Flicken 16 steht nur über die partielle Verbindungsstruktur 18 mit der Reifeninnenseite in Verbindung.

### Bezugszeichenliste

### (ist Teil der Beschreibung)

- 1: Transponder
- 2: Kissenlagerung
- 3: Reifeninnenseite
- 4: Substrat
- 5: Transponder-Chip
- 6: Öffnungskanal zur Reifeninnenseite
- 7, 8: Verbindungsstellen des Flickens zur Reifeninnenseite
- 9: Ausnehmungen in Kissenlagerung
- 10: Flicken bzw. Abdeckung
- 11: Trennmedium
- 12: Kavität des Flickens
- 13: pilzförmiges Ende des Verbindungssteges
- 14: Röhrenartiger Verbindungssteg
- 15: Schnapp- oder Rast-Verbindung
- 16: Flicken mit integriertem Substrat und partieller Verbindung zur Reifeninnenseite
- 17: Trennmedium
- 18: Partielle Verbindungsstelle
- 19: Antennenspule
- 20: Verbindungssteg

## Patentansprüche

1. Transponder der an einem Reifen angebracht ist, wobei der Transponder
- zumindestens einen Transponder-Chip sowie eine Transponder-Antenne umfasst und in ein Substrat eingebettet ist, und
- das Substrat über ein Mittel mit einer Reifeninnenseite in Verbindung steht,
- wobei das Substrat (4) von der Reifeninnenseite (3) über eine zwischen dem Substrat (4) und der Reifeninnenseite (3) angeordnete Verbindungsstruktur in Form einer weichen oder gleitenden Lagerung derartig entkoppelt ist, dass keine oder nur minimale mechanische Spannungen auf das Substrat (4) übertragen werden,
**dadurch gekennzeichnet, dass**
- das Substrat (4) von einem Flicken (10) überdeckt wird, der mit der Reifeninnenseite (3) verbunden ist, wobei zwischen dem Substrat (4) sowie der Reifeninnenseite (3) ein Trennmedium (11) angeordnet ist, auf der sich das Substrat (4) gleitend bewegen kann.

2. Transponder nach Anspruch 1,
**dadurch gekennzeichnet, dass**
zwischen dem Substrat (4) und dem Flicken (10) ein Trennmittel angeordnet ist.

3. Transponder nach Anspruch 1 oder 2,
**dadurch gekennzeichnet, dass**
der Flicken (10) an mindestens einer Stelle luftdurchlässig ist.

4. Transponder nach einem der Ansprüche 1 bis 3,
**dadurch gekennzeichnet, dass**
das Substrat (4) in einem Fluid in einer Kavität (12) des Flickens gelagert ist.

5. Transponder nach einem der Ansprüche 1 bis 4,
**dadurch gekennzeichnet, dass**
das Substrat (4) eine der Reifeninnenseite (3) angepasste bogenförmige Gehäusekontur aufweist.

6. Transponder nach einem der Ansprüche 1 bis 5,
**dadurch gekennzeichnet, dass**
das Substrat (4) in einem Flicken (16) angeordnet ist, der nur in einem oder mehreren Teilbereichen fest mit der Reifeninnenseite (3) verbunden ist.

## Claims

1. Transponder which is attached to a tyre, the transponder
- comprising at least one transponder chip and a transponder antenna and being embedded in a substrate, and
- the substrate being in connection with an inner side of the tyre by means,
- the substrate (4) being isolated from the inner side (3) of the tyre, by means of a connecting structure arranged between the substrate (4) and the inner side (3) of the tyre in the form of a soft or sliding mounting, in such a way that no or only minimal mechanical stresses are transferred to the substrate (4),
**characterized in that**
- the substrate (4) is covered by a patch (10), which is connected to the inner side (3) of the tyre, a separating medium (11) on which the substrate (4) can move in a sliding manner being arranged between the substrate (4) and the inner side (3) of the tyre.

2. Transponder according to Claim 1, **characterized in that** a separating means is arranged between the substrate (4) and the patch (10).

3. Transponder according to Claim 1 or 2, **characterized in that** the patch (10) is air-permeable in at least one area.

4. Transponder according to one of Claims 1 to 3, **characterized in that** the substrate (4) is supported in a fluid in a cavity (12) of the patch.

5. Transponder according to one of Claims 1 to 4, **characterized in that** the substrate (4) has an arcuate housing outline adapted to the inner side (3) of the tyre.

6. Transponder according to one of Claims 1 to 5, **characterized in that** the substrate (4) is arranged in a patch (16), which is securely connected to the inner side (3) of the tyre only in one or more subregions.

## Revendications

1. Transpondeur installé sur un bandage de roue,
le transpondeur comprenant au moins une puce de transpondeur ainsi qu'une antenne de transpondeur et étant incorporé dans un support,
le support étant relié à la face intérieure du bandage par l'intermédiaire d'un moyen,
le support (4) étant découplé de la face intérieure (3) du bandage par une structure de liaison qui est disposée entre le support (4) et la face intérieure (3) du bandage et qui présente la forme d'un montage déformable ou coulissant, de telle sorte qu'aucune contrainte mécanique ou que seules des contraintes mécaniques minimales soient transmises au support (4),
**caractérisé en ce que**
le support (4) est recouvert par une pastille (10) reliée à la face intérieure (3) du bandage et
**en ce qu'**un milieu de séparation (11) sur lequel le support (4) peut se déplacer par coulissement est disposé entre le support (4) et la face intérieure (3) du bandage.

2. Transpondeur selon la revendication 1, **caractérisé en ce qu'**un moyen de séparation est disposé entre le support (4) et la pastille (10).

3. Transpondeur selon les revendications 1 ou 2, **caractérisé en ce que** la pastille (10) est perméable à l'air en au moins un emplacement.

4. Transpondeur selon l'une des revendications 1 à 3, **caractérisé en ce que** support (4) est monté dans un fluide qui occupe une cavité (12) de la pastille.

5. Transpondeur selon l'une des revendications 1 à 4, **caractérisé en ce que** le support (4) présente un boîtier dont le contour cintré est adapté à la face intérieure (3) du bandage.

6. Transpondeur selon l'une des revendications 1 à 5, **caractérisé en ce que** le support (4) est disposé dans une pastille (16) qui n'est reliée solidairement à la face intérieure (3) du bandage qu'en une zone partielle ou en plusieurs zones partielles.
